# EUROPEAN PATENT SPECIFICATION

(11) **EP 0 572 668 B1**
(45) Date of publication and mention of the grant of the patent: **05.11.1997**
(21) Application number: 92906231.3
(22) Date of filing: 27.02.1992
(51) Int. Cl.: B41J 29/00, B41J 29/38, G06F 3/12, G06F 13/42

(54) **APPARATUS AND METHOD FOR PROCESSING INFORMATION, AND ADDITIONAL CONTROL DEVICE USED THEREIN**
APPARAT UND VERFAHREN ZUR INFORMATIONSVERARBEITUNG, UND ZUSÄTZLICHE INTEGRIERTE STEUERVORRICHTUNG
APPAREIL ET PROCEDE ET TRAITEMENT DE L'INFORMATION, DISPOSITIF DE CONTROLE COMPLEMENTAIRE INTEGRE

(30) Priority: 23.10.1991 JP 305457/91
(43) Date of publication of application: 08.12.1993
(73) Proprietor: SEIKO EPSON CORPORATION, Shinjuku-ku Tokyo 160 (JP)
(72) Inventor: WAKABAYASHI, Ken-ichi, Suwa-shi, Nagano-ken 392 (JP); TAKAYAMA, Chitoshi, Suwa-shi, Nagano-ken 392 (JP); SHIOZAKI, Tadashi, Suwa-shi, Nagano-ken 392 (JP)
(74) Representative: Hoffmann, Eckart, Dipl.-Ing.
(86) International application number: PCT/JP92/00245
(87) International publication number: WO 93/08028

(56) References cited:
- WO-A-90/12359
- JP-A- 2 037 590
- JP-A- 2 058 789
- JP-A- 2 122 343
- JP-A- 2 244 851
- JP-A- 2 253 289
- JP-A- 3 022 160
- JP-A- 3 051 938
- JP-A- 3 053 635
- JP-A-62 001 181
- JP-A-62 005 875
- JP-A-62 111 776
- JP-A-63 255 750
- C T, no.7, July 1987, GERMANY pages 138 - 145 E.MEYER 'HOCHZEIT ZU DRITT-ATARI ST MIT ECB UND IBM-PC-BUSSYSTEM'
- Byte Vol.15, No.10, October 1990

## Description

The present invention relates to accessory control devices that may be added to various types of electronic devices, and to information processing devices including these accessory control devices and electronic devices, and more specifically it relates to information processing devices wherein a data bus of a processor of the electronic device transfers data from the electronic device to an accessory control device connected to a connector.

In recent years, personal computers, word processors, workstations and other electronic devices founded on digital operation, and printers, facsimile machines, electronic pocketbooks, electronic musical instruments, electronic cooking appliances, electronic cameras and other electronic devices containing microprocessors are being used in all areas of society. Further, the use of microprocessors is spreading to automobiles, robots and machine tools, as well as to all types of electric products.

Devices founded on this type of digital logic operation have the potential of flexible control and data processing as compared with simple feedback control, etc., realized with hardware only, and they also have the advantage of being able to change essential functions by changing the software. Therefore, it is possible to realize completely different control within the same hardware by just changing the contents of the ROM where procedures are stored, or loading a new program to the man memory from an external device such as a floppy disk. Another advantage is the ability to upgrade functions by just changing the software.

However, since the throughput of the processor that actually performs control is dependent on the hardware, i.e., number of operations per unit time, number of bits that can be handled at one time and width of the bus that performs data transfer, improvement by upgrading the software is limited to only improved usability, and any significant improvement in the performance of the existing electronic device cannot be achieved. Further, upgrading by changing the software requires replacement of the ROM if the software is burned into the ROM, thus making it difficult in many cases. Therefore, upgrading the software is difficult in cases except in which ROM replacement is designed into the device from the beginning or the software is supplied on a replaceable medium such as a floppy disk.

In personal computers, for example, accelerators are used which improve the functionality of the entire computer by completely replacing the microprocessor, but this requires replacement of the CPU on the motherboard or other difficult operations that cannot by performed by just anyone. In electronic devices intended for use as a personal computer, a connector is often provided for the installation of ROM cards, font cartridges, etc. If an accessory control device could be installed in this connector, the functionality of the electronic device could be improved, added to or changed, but examination of the data transfer bus of these connectors will show that many of them are read-only signal lines as seen from the internal processor, in which case an accelerator cannot be installed in the connector since it cannot receive data from the processor in the electronic device.

Normally, no consideration has been made regarding the improvement or changing of the functionality of printers, facsimile machines, electronic pocketbooks, electronic musical instruments, electronic cooking appliances, electronic cameras and other consumer electronics containing a microprocessor, electrical equipment for automobiles, robots, machine tools and other industrial electronic apparatus, and all types of electric appliances, and even if a connector for expansion is provided, it is generally restricted to the function of only reading out data. This problem is described in detail below using a page printer as an example.

In recent years, the diffusion of laser printers and other page printers has become extremely widespread, and high speed output devices for data from computers have become common. In the case of laser printers, their resolutions range from 240 to 800 dots per inch (DPI), and printers capable of printing several pages a minute are being developed. These printers employ a xerography unit that uses a photosensitive drum as the engine for printing, and since they continuously perform each of the charging, exposure, toner application and transfer processes in sync with the rotation of the photosensitive drum, printing processing begins after the image for a single page is stored in memory.

Therefore, the memory provided in page printers for image development must have a capacity sufficient to hold the image for at least one page, and if compression of image data is not performed, the capacity is determined by the resolution and the size of the paper that can be processed. For example, in the case of a resolution of 300 DPI and a paper size of 8 inches (approx. 203 mm) by 10 inches (approx. 254 mm), then 7,200,000 (8 x 10 x 300 x 300) dots must be manipulated and at least a 0.9-megabyte memory is required.

In printers with a function that receives character codes, row and column pitch and other information as print data and expands this into the image, or in printers that receive a program described by a page description language and expand the image by interpreting it, it is necessary to calculate and produce a bit image based on this print data, which greatly reduces the overall processing speed compared to simple bit image transfer. That is, the processing speed of a printer is determined mainly by the throughput of the processor that performs processing and memory access time and falls far short of the printing throughput of the xerography unit itself.

For example, in a page printer capable of printing 10 pages in one minute, only six seconds is allowed to prepare the image data for one page of printing, and to develop all of this 0.9 megabytes of data in this period of time means that the processing time allowed for one byte is a mere 6.6 microseconds (6 s/0.9 MB). This processing speed can possibly be realized with one of the high speed RISC type processors currently available on the market. In contrast to this, there are currently many xerography units capable of printing 10 pages per minute. Therefore, the throughput of the controllers that process print data has become a bottleneck in improving overall print speeds.

For this reason, there are cases in which the image developing throughput is always below the xerography unit's throughput in prior art laser printers, and even if it becomes possible to obtain a processor with a high image developing throughput as microprocessor technology advances, it is impossible to improve functionality later. There are some page printers whose functionality can be improved by providing an expansion slot and installing a cartridge with built-in fonts or programs in it, but the structure of the data bus of the slot connector is read only from the cartridge connector and data cannot be transferred to the cartridge and processed.

The document c't, No. 7, July 1987, DE, pages 138 to 146, E. MEYER: "Hochzeit zu dritt/ATARI ST mit ECB und IBM-PC-Bussystem", describes an information processing device in accordance with the pre-characterizing part of claim 1. There, an interface is adapted for connection to the ROM port which is only designed for reading of ROMs. For achieving a write effect, a certain storage area is reserved and the address signals for this storage area are interpreted as output data.

The purpose of the accessory control device and information processing device of the invention is to solve the above problem and make it possible to improve, change or add to the overall functionality of electronic devices.

The present invention realizes an information processing device and an accessory control device used in it which are capable of transferring data to the accessory control device without using a data bus for data transfer, as defined in claim 1 or 2. The resulting effect is to be able to process data in the accessory control device in not only cases in which there is a data bus for transferring data, but also in cases in which there is no such bus configuration. Overall, the device makes it possible to perform at least some of the processing on data in the accessory control device, in which case the functions of the electronic device can be improved, added to or changed.

The ability to access the accessory control device from the electronic device means that the connector connecting the two will have at least an address signal line or other control signal line as a signal line. The invention is distinguished by making it possible to perform data transfer using an address signal line and/or a control signal line in an information processing device and accessory control device under the restriction of not being able to send signals to the accessory control device via a data bus and in turn to process information in the accessory control device. A summary of the invention noted in claims 1 and 2 is disclosed below together with the principle of data transfer.

When an address output means of the electronic device outputs an address signal via the connector, the data fetch means in the accessory control device fetches the data from the number of accesses from the electronic device. As a result, such processing as the storage or display of or operations on data can be performed in the accessory control device, and when considered overall, the functionality of the device can easily be improved, added to or changed.

Here, by equipping the accessory control device with a second processor that performs processing separate from the first processor of the electronic device and having the second processor execute procedures stored in the second memory means, information processing that uses a processor can be performed in the accessory control device, thus facilitating operations judgment and other high level data processing. Further, in cases in which a processor is used, the content of data processing can be realized using software, thus making it easy to improve, add to or change the content of processing. It is also possible to have the accessory control device perform at least a part of all the information processing performed by the information processing device.

In one configuration, the electronic device outputs prescribed address signals in a number corresponding to the data to be transferred and the accessory control device detects the number of these address signals by means of a condition memory means (i.e., counter), whereby it can restore the data. In this case, a fewer number of addresses can be used for data transfer.

If the electronic device reflects the data to be transferred in a control signal and the accessory control device fetches the data reflected in this signal, then data can be transferred using a control signal line. The selection signal that selects the accessory control device from the electronic device, write and read control signals, interrupt signals, power lines, etc., can be used as the control signals or control signal line, respectively. This makes it possible to transfer data between devices where address signals are not exchanged.

The procedure executed by the first processor of the electronic device for transferring data can be built into the electronic device in advance, but a third memory means for storing this procedure can also be provided in the accessory control device. The procedure stored in the third memory means can also be executed after being transferred to the memory means of the electronic device, but the configuration can be simplified by assigning the third memory means to an address space of the first processor in the electronic device to make it possible for the first processor to execute the procedure directly. In this case, the first processor in the electronic device can be made to operate according to the requirements of the accessory control device, and data transfer and data processing can be realized in any form.

Also, it is desirable that the accessory control device be configured as a cartridge equipped with at least a printed circuit board on which the second processor is mounted and having a case that houses the printed circuit board to facilitate its use as a single unit.

The data processed by the accessory control device can be retained as it is for use in the accessory control device, but by outputting the data to the electronic device after being processed, the functionality of the electronic device can be added to, changed or improved. Another possible use of the data after being processed is to display it on a display device in the accessory control device.

The information handled by the information processing device can be a variety of types; e.g., by providing the electronic device with a display means that displays at least characters, graphics or color and having the accessory control device generate the image data displayed on the display device based on data transferred from the electronic device, the accessory control device functions as a display accelerator, thus making it possible to improve the processing speed of the display section, which normally places a large demand on the electronic device. A CRT, liquid crystal panel, plasma display or other optical display means can be used as the display device, or a display device for printing such as a printer, pen plotter and cutting plotter can be used. A configuration is also practical in which the electronic device is a printer that receives the print data as it is and prints it. Further, a configuration as an information processing device for the processing of sound is also possible.

By using the accessory control device to develop image data based on data received from the electronic device, the image processing capability of the printer can be improved or changed. Also, by using a page description language to develop the image data, complex image processing can be easily realized.
- FIG. 1: is a generalized block diagram showing a printer device which is an embodiment of the invention;
- FIG. 2: is block diagram showing the configuration of the electronic control device 10 built into the main printer unit 1 of the embodiment;
- FIG. 3: is a perspective view showing the outside of the cartridge 3 and its attachment to the main printer unit 1;
- FIG. 4: is a block diagram showing the overall configuration of a second embodiment;
- FIG. 5: is an exploded perspective view showing the configuration of a cartridge in the second embodiment;
- FIG. 6(A), 6(B): show plan views of the top and bottom of a printed circuit board indicating where the elements are mounted;
- FIG. 7: is an explanatory diagram showing the configuration of signal wires in a connector;
- FIG. 8: is an explanatory diagram showing the address map of the cartridge as seen from the electronic control device;
- FIG. 9: is an explanatory diagram showing the address map of the cartridge as seen from the microprocessor of the cartridge;
- FIG. 10: is a block diagram showing the internal configuration of the cartridge;
- FIG. 11A, 11B, 11C: are circuit diagrams snowing example configurations of the interrupt request registers;
- FIG. 12: is a circuit diagram showing an example configuration of polling command registers;
- FIG. 13: is an explanatory diagram showing the contents of status registers;
- FIG. 14: is a circuit diagram showing an example configuration of a double-bank control circuit;
- FIG. 15: is a flowchart of the processing for beginning data transfer using the double-bank control circuit;
- FIG. 16: is a flowchart of the response processing executed in the electronic control device;
- FIG. 17: is a flowchart of the processing executed in the electronic control device for realizing data transfer using the double-bank control circuit;
- FIG. 18: is a flowchart of the processing executed in the cartridge for realizing data transfer using the double-bank control circuit;
- FIG. 19: is a timing chart showing the timing for the printing of image data performed by controlling the laser engine;
- FIG. 20: is a circuit diagram showing an example configuration of a circuit that performs data transfer using a counter; and
- FIG. 21: is another circuit diagram showing an example configuration.

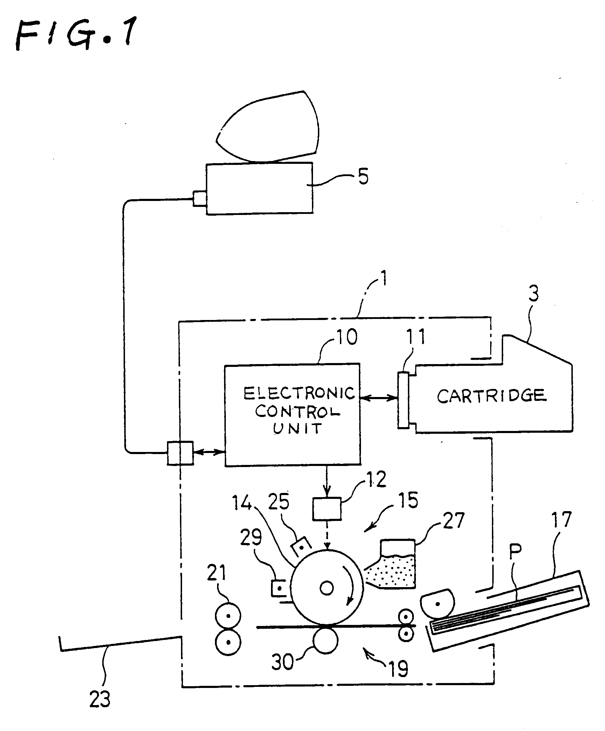

Preferred embodiments of the invention are explained below in order to further clarify the configuration and action of the invention described above. First is an explanation of an embodiment in which the invention is applied to a printer. FIG. 1 is a block diagram showing the general configuration of a main printer unit 1 of the embodiment and a cartridge 3 installed in it.

As shown in the figure, the main printer unit 1 is a so-called "page printer" that uses a xerography method, and it forms an image on paper P by a xerography method based on print data sent from an external computer 5. Inside the man printer unit 1 are disposed an electronic control device 10, which inputs print data and develops the image, an address bus of the electronic control device 10, a connector 11 to which the data bus, etc., are connected, a semiconductor laser device 12 driven by the electronic control device 10, a xerography unit 15 configured around a photosensitive drum 14, a paper cassette 17, which houses the paper P, a transport mechanism 19 which transports the paper P so that it comes in contact with the outside circumference of the photosensitive drum 14, a thermal fixing roller 21 which fixes the toner by heating the paper P to which the toner has been transferred, and a tray 23 into which the printed paper P is ejected.

The xerography unit 15 comprises a charging unit 25 that charges the surface of the photosensitive drum 14, a toner unit 27 that applies toner, which has been charged itself, to areas where the charge has been dissipated by the laser beam from the semiconductor laser device 12, and a toner removal unit 29 that removes toner remaining on the photosensitive drum 14 after transfer to the paper P. The electronic control device 10 drives the semiconductor laser device in sync with the rotation of the photosensitive drum 14 so that areas corresponding to the image to be printed are irradiated with a laser beam to form a latent image. Since those areas irradiated by the laser beam loose their charge, the toner charged with the same sign as the photosensitive drum 14 is transferred to only those areas that have lost their charge.

One sheet of paper P is pulled from the paper cassette 17 in sync with the rotation of the photosensitive drum 14 and is transported to the photosensitive drum 14 by the transport mechanism 19. Since the paper P is transported between the photosensitive drum 14 and the transfer roller 30, the majority of the toner on the photosensitive drum 14 is transferred to the paper P. The paper P is transported to the heat fixing roller 21 with the toner on its surface, and here the toner is melted by heat and fixed to the paper P. This is a brief explanation of the printing process in the main printer unit 1, but the invention is not limited to laser printers and can also be applied to printers that use LEDs for exposure of the photosensitive drum 14, printers that use an ink jet method for printing and other types of printers.

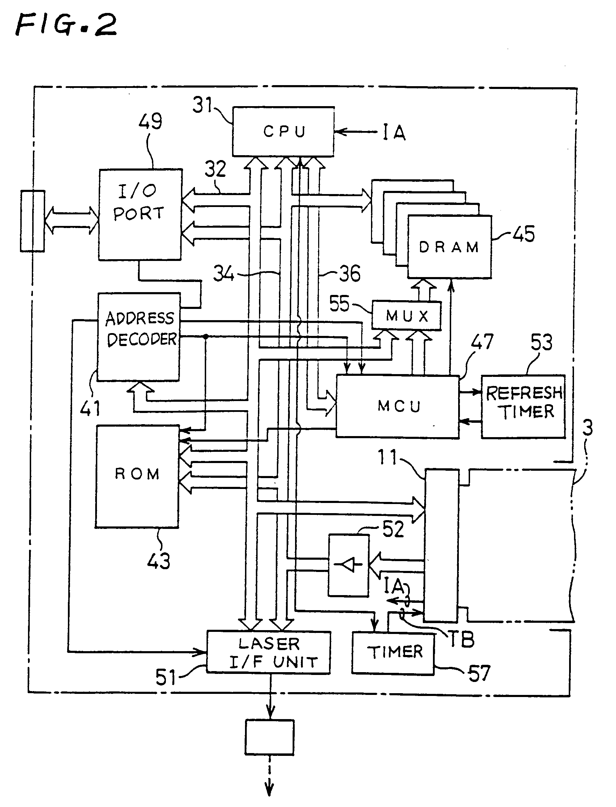

Next is an explanation of the configuration of the electronic control device 10 built into the main printer unit 1. As shown in FIG. 2, the electronic control device 10 is configured as an arithmetic logic operation circuit centering around a CPU 31, which is a commonly used processor that performs all processing, and in the configuration, each of the elements below are connected to an address bus 32, a data bus 34 and a control signal bus 36. The elements connected to these buses include an address decoder 41, ROM 43, dynamic RAM (DRAM) 45, memory control unit (MCU) 47, I/O port 49, laser I/F 51 and connector 11. Each element is connected in such a way that it can read and write to each bus, but only the connector 11 is provided with a bus driver 52 between it and the data bus 34, and as seen from the CPU, the cartridge 3 connected to the connector 11 is a read-only device.

The address decoder 41 decodes the address signals generated by the CPU 31, and when a certain address is specified, it outputs a select signal to ROM 43, DRAM 45, the I/O port 49 and the laser I/F 51 according to the assignments to memory space. The ROM 43 contains a processing program, and normally the CPU 31 operates according to the program stored in ROM 43. The DRAM 45 is used to develop the image data, and since it is necessary to store image data for at least one page, it has a 2 megabyte capacity in this embodiment.

The MCU 47 analyzes the control signal output by the CPU 31, outputs control signals for ROM 43 and DRAM 45, outputs read-write signals for memory and the I/O port, and determines the refresh timing for DRAM 45. The refresh timer 53 is connected to the MCU 47, which receives a signal from the refresh timer 53, and if the MCU 47 judges that it is a timing at which refresh is possible, then the MCU 47 outputs the refresh addresses to DRAM 45 via the multiplexer 55. The I/O port 49 receives print data from the external computer 5 and also serves as an interface for the motor, etc., which are not shown, of the xerography unit 15. Further, the laser I/F 51, which drives the semiconductor laser device 12, is connected to the cartridge 3 and serves as the interface for the semiconductor laser device 12. The electronic control device 10 is also provided with a timer 57 connected to line connector 11 and the CPU 31.

The basic functions of the main printer unit 1 equipped with this electronic control device 10 are to develop the print data (data already developed into a bit image) received from the external computer 5 via the I/O port 49 in the internal DRAM 45, and control the xerography unit 15 and drive the semiconductor laser device 12 when the data for one page have been prepared so that the image data are printed as it is. In addition to these basic functions, the main printer unit 1 of this embodiment is capable of a higher level of printing as an expansion function using a cartridge connected to the connector 11. In the case of this main printer unit 1, a cartridge 3 with a built-in processor as described below can be connected to it in addition to existing cartridges such as font cartridges containing fonts and cartridges containing programs that interpret page description languages.

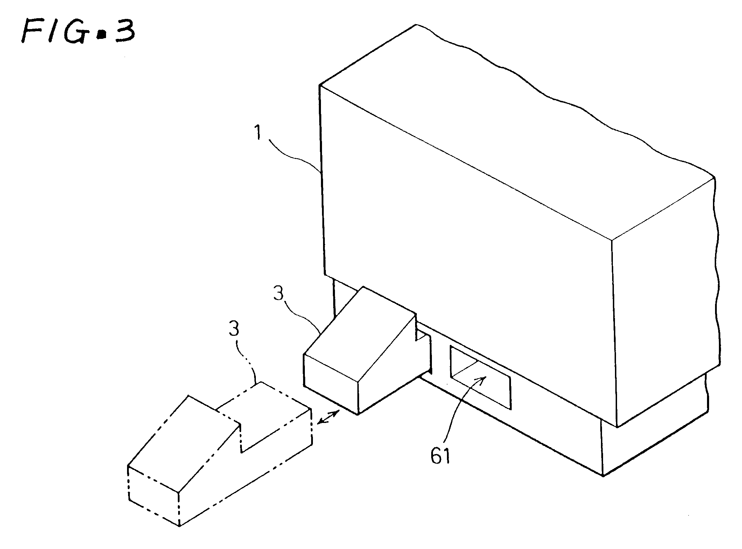

An external view of the cartridge 3 of this embodiment is shown in FIG. 3. As shown in the figure, this cartridge 3 is installed in a connector fitting 61 on the main printer unit 1, and in contrast to the rectangular solid shape of the end inserted in the connector fitting 61, that part protruding from the case of the man printer unit 1 has a trapezoidal-shaped longitudinal section. When the cartridge 3 is inserted in the connector fitting 61, the connector on the end of the cartridge 3 engages the connector 11, and both become electrically connected. In this condition, the raised part of the cartridge 3 moves to a position that brings it nearly in contact with the case of the main printer unit 1. The front part of the cartridge 3 that protrudes from the case of the main printer unit 1 is inclined on top so that no objects can be inadvertently placed on it.

Next is an explanation of an embodiment of the invention applied to a laser printer. This embodiment combines a cartridge 503 as an accessory control device with a laser printer 500 as an electronic device. The laser printer 500 uses a xerography unit and the part that prints using a photosensitive drum functions independently as a laser engine 505. An electronic control device 501, which performs control of the entire laser printer 500, can perform printing by only sending commands to the laser engine 505 via a connector CN10 and transferring image data to a prescribed buffer.

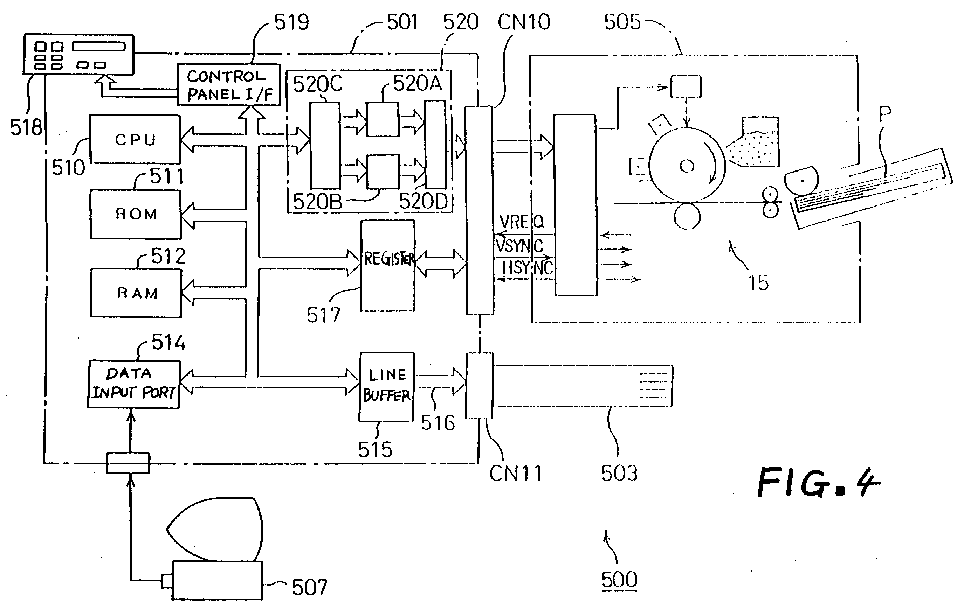

As shown in FIG. 4, inside the electronic control device 501 are disposed a commonly used CPU (Motorola's MC68000 in this embodiment), a ROM 511 that stores the programs executed by the CPU 510, a RAM where print data or image data subsequent to being developed are stored, a data input port 514 that receives print data from the host workstation 507, a line buffer 515 connected to a bus line 516 which exchanges data with the cartridge 503, a register 517 for exchanging commands and status information with the laser engine 505, a console panel I/F 519 that serves as the interface with a console panel 518 of the laser printer 500, and a double-buffer circuit 520 where the image data to be transferred to the laser engine 505 are stored. The bus line configuration and the control line configuration are the same as in Fig. 2.

The double-buffer circuit 520 is equipped with the RAMs 520A and 520B, capable of holding 8 lines of print data, i.e., 4-kilobyte capacity, for printing by the laser engine 505, and image data from the CPU 510 are written alternately to these RAMs by the memory write controller 520C. The laser engine 505 performs printing by reading these two RAMs 520A and 520B alternately via the memory read controller 520D and converting the image data to a video signal in sync with the rotation of the photosensitive drum. These two RAMs 520A and 520B are provided and written and read alternately because access from the CPU 510 and access from the laser engine 505 must be performed independently.

After the CPU 510 has written data to one RAM, it sets a flag at a prescribed bit in the register 517. In response, the laser engine checks this flag and reads the image data stored in the RAM where the data were written. During reading, it sets a flag at another bit in the register 517 to let the CPU 510 know which RAM is being read. Since the other RAM is not accessed by the laser engine 505 at this time, the CPU 510 writes the next 8 lines of image data to this RAM during this time. When the laser engine 505 finishes reading from one RAM, it resets the flag and switches to reading from the other RAM. Since the speed with which the CPU 510 writes data is faster than the speed with which the laser engine 505 reads data, i.e., speed with which printing is executed, it is easy to avoid interference between memory access by the two and realize the reliable transfer of one page of image data.

The cartridge 503 is mounted in the connector CN11 of the electronic control device 501. The relationship between the laser printer 500 and the cartridge 503 mounted in it is the same as in the first embodiment, in that the electronic control device 501 judges whether or not the cartridge 503 is installed in the connector CN11 at the time of power on, and if it is judged to be installed, then after initializing the devices of the electronic control device 501, it jumps to a prescribed address in the ROM (described below) provided in the cartridge 503, after which the processing provided in the cartridge 503 is executed in sequence. The cartridge 503 interprets the program generated by the page description language and output from the workstation 507 to the laser printer 500 and develops it into image data and the laser engine 505 performs printing.

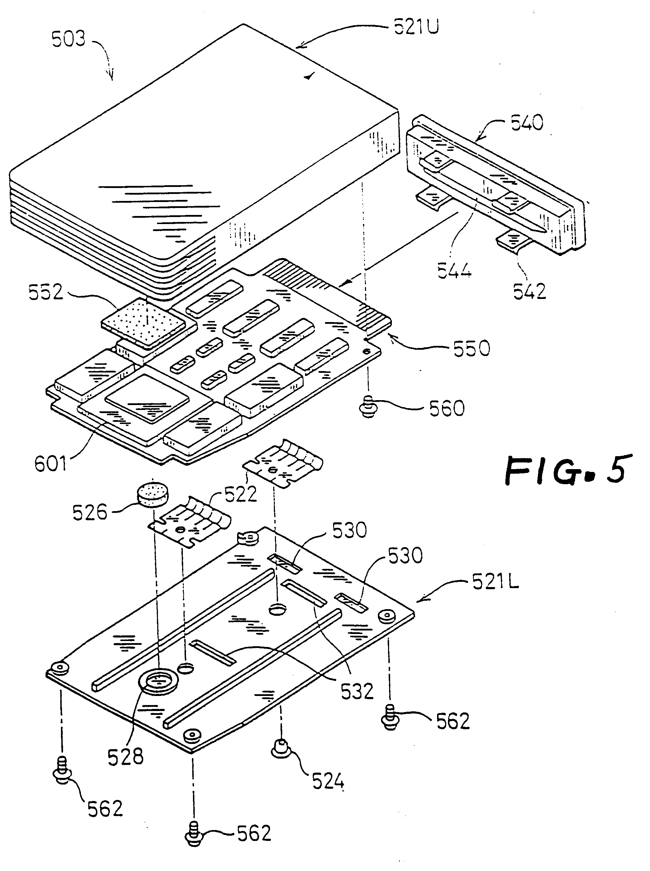

The cartridge 503 of this embodiment, which is installed in the cartridge connector CN11 of the printer 500 has a structure like that shown in FIG. 5 in which a multilayer printed circuit board 550 (printed circuit board below) is inserted between an upper case 521U recessed on the inside and a plate-like lower case 521L and a cap 540 is inserted on the connector side of the printed circuit board 550. The microprocessor 601 described below and other circuit elements are mounted on the printed circuit board 550. Both the upper case 521U and lower case 521L are made from aluminum. Due to the high heat conductivity of aluminum, the heat generated by the internal elements can be effectively carried to the outside and released.

Two grounding spring members 522 for securing a ground connection with the main printer unit are fixed to the lower case 521L with rivets 524, and a cylindrically shaped piece of silicon rubber 526 for applying pressure on the printed circuit board 550 from below is fitted in the rubber retainer 528 on the inside surface of the lower case. The silicon rubber 526 for applying pressure is disposed directly below the microprocessor 601. A sheet shaped piece of silicon rubber 552 for radiating heat is positioned between the top surface of the microprocessor 601 and the inside surface of the upper case 521U to improve contact and heat conductivity. When the cartridge 503 is assembled, the silicon rubber 526 for applying pressure pushes on the printed circuit board 550 upward to improve the contact between the microprocessor 601, the silicon rubber 552 for radiating heat and the upper case 521U. As a result, good conductivity of heat from the microprocessor 601 to the upper case 521U is achieved, thus efficiently radiating heat up.

In assembly, first the upper case 521U is turned upside down and the silicon rubber 552 for radiating heat is fixed in a prescribed position on the upper case 521U, after which the printed circuit board 550 is secured to the inside of the upper case by one screw 560. The lower case 521L is then fitted in the upper case 521U and each of the corners are secured in place with screws. The cartridge is then completed by inserting the cap 540 in the cap opening between the upper case 521U and the lower case 521L.

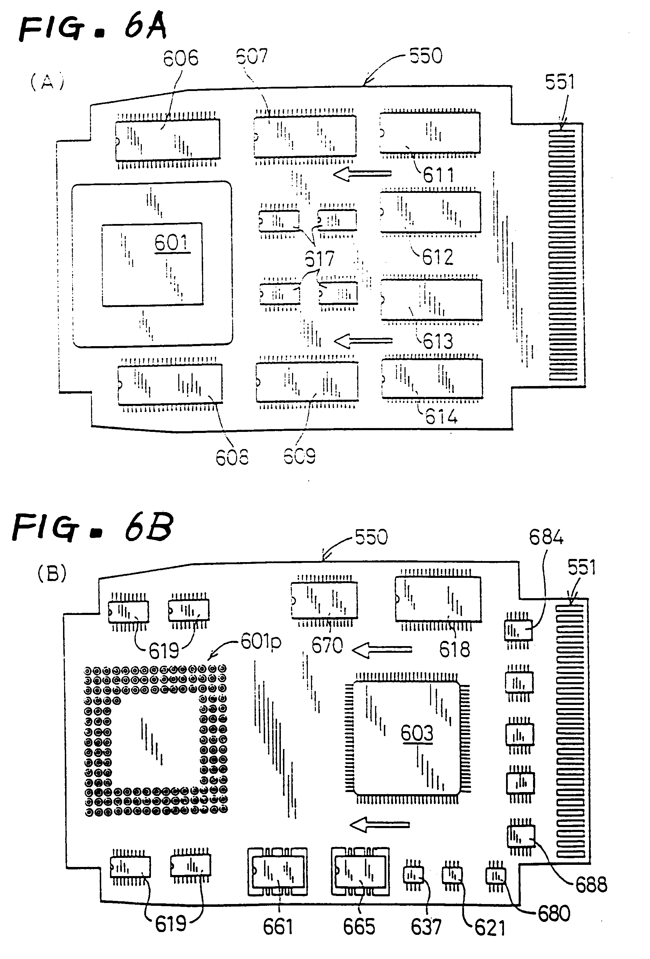

FIG. 6(A) is a plane view showing the top of the printed circuit board 550, and FIG. 6(B) is a plane view showing the bottom of the printed circuit board 550.

As shown in FIG. 6(A), the microprocessor 601 is attached at one end to the top surface of the printed circuit board 550, and at the other end is formed an insertion plug 551 in which multiple electrodes are formed in a row for connecting to the connector CN11 of the man printer unit.

On each of the sides of the printed circuit board 550 near the microprocessor are disposed two ROMs 606, 607 and 608, 609, respectively, for storing the control program, etc., for the microprocessor 601. Four tristate buffers 617 are disposed in a square pattern in the center of the printed circuit board 550 next to the microprocessor 601. Four dynamic RAMs 611 to 614 are arranged in a row between the ROMs 606 to 609 and the plug 551 and between the tristate buffers 617 and the plug 551. To simplify the drawing, the wiring pattern formed on the surface of the printed circuit board 550 is omitted.

The microprocessor 601 is a pin grid array (PGA) type element, and the other elements are SOJ types, SOP types or QFP types. AMD Corporation's Am29030 RISC processor (25-MHz clock frequency), for example, is used as the microprocessor 601.

As shown in FIG. 6(B), the plug 551 is also formed at one end on the bottom surface of the printed circuit board 550. Further, the pins 601p of the microprocessor 601 protrude at the other end. Two tristate buffers 619 are disposed on each side of the microprocessor 601. The ASIC (special-application LSI) 603, which contains the control circuit and registers for the microprocessor 601, is disposed in a position in the center of the printed circuit board 550 toward the plug 551.

An EEPROM 670, which stores the configuration of the main printer unit (number of pages to be printed, paper size, margins, fonts, communication parameters and other parameters related to the operation of the printer), is disposed on the side of the printed circuit board 550 near the ASIC 603. Next to the EEPROM 670 is disposed a ROM 618, which stores the program for operating the microprocessor of the main printer unit.

On the side opposite the EEPROM 670 are disposed two oscillators 661 and 665. The first oscillator 661 is a circuit that generates a signal which becomes the basis for the clock signal of the microprocessor 601 and generates a 50-MHz clock signal, for example. The second oscillator 665 is a circuit that generates a clock signal for use in the interval timer processor and generates a 5-MHz clock signal, for example. By providing an oscillator 661 exclusively for the microprocessor 601 in this way, the clock frequency of the microprocessor 601 can be easily changed by only replacing the oscillator 661.

Next to the oscillator 665 are disposed a reset element 637, a FIFO memory 621 and a NAND gate 680 in a row along the edge of the printed circuit board 550. Five tristate buffers 684 to 688 are disposed in a row parallel to the plug 551.

As shown in FIG. 6(A), (B), the longitudinal direction of rectangular elements is arranged in the direction of insertion of the cartridge 3 on both the top and bottom of the printed circuit board 550. This arrangement facilitates the flow of air, as indicated by the arrows, from the plug 551 toward the microprocessor 601, thus contributing to cooling of the microprocessor 601.

As described above, this cartridge 3 is inserted in the cartridge insertion opening of the main printer unit. Regular font cartridges only house ROMs in which font data are stored. In contrast to this, this cartridge 3 is equipped with a microprocessor 601, ROMs 606 to 609 in which the processing program for the microprocessor 601 is stored, a ROM 618 in which the processing program for the processor in the main printer unit is stored and a control circuit including the ASIC 603.

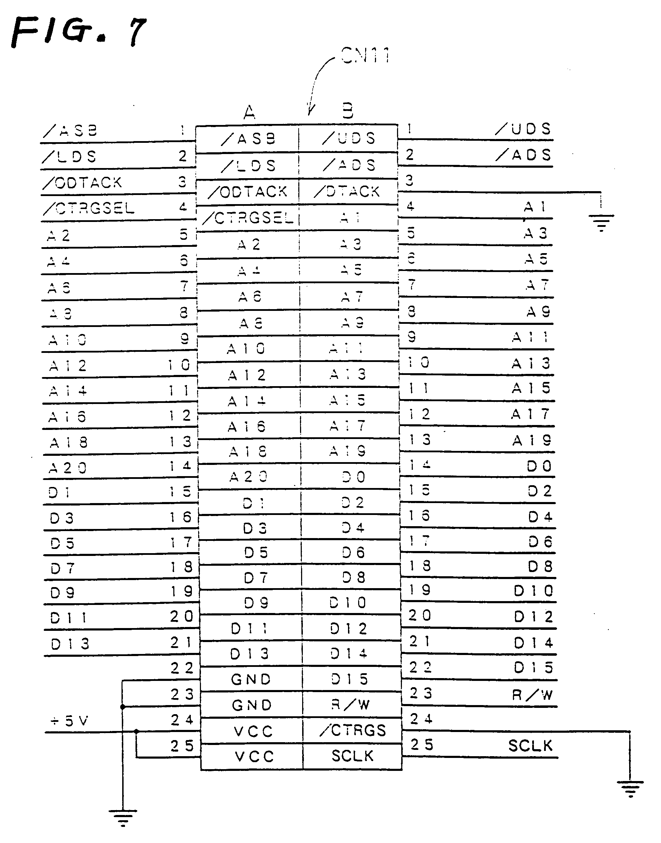

FIG. 7 shows the wiring relationship between the plug 551 formed on the end of the printed circuit board 550 and the connector CN11. The plug 551 has 25 terminals formed on each of the two sides (A side and B side) of the two-sided printed circuit board. FIG. 7 lists the signal names corresponding to each of the terminals of the plug 551. The slash (/) attached to the front of signal names indicates that the signal is low active. The meaning of each of the signals is as follows.
Signal /ASB: address strobe signal output by the CPU 510 (MC68000, Motorola Corporation).
Signal /UDS: upper data strobe signal output by the CPU 510.
Signal /LDS: lower data strobe signal output by the CPU 510.
Signal /ADS: auxiliary address strobe signal generated based on the address strobe signal /ASB in the electronic control device 501. This auxiliary address strobe signal /ADS demonstrates different behavior in different types of printers when the printer is initialized. In this embodiment, as described below, the printer type is judged based on the behavior of this auxiliary address strobe signal /ADS at the time of initialization.
Signal /ODTACK: output data acknowledge signal for data transferral from the cartridge 503 to the electronic control device 501.
Signal /CTRGSEL: cartridge selection signal in case the CPU 510 selects the cartridge 503 and accesses the ROM 56, register, etc., assigned to the address space inside the cartridge.
Signals A1-A20: address signals output by the CPU 510.
Signals D0-D15: output data signals from the cartridge 503.
Signal R/W: read-write signal output by the CPU 510.
Signal SCLK: clock signal output from the oscillator (not shown) built into the laser printer 500.

The signal /CTRGS supplied to the laser printer 500 becomes low level when the cartridge 503 is inserted, and the CPU 510 detects that the cartridge 503 has been inserted in the connector CN11 by this.

The CPU 510 specifies word addresses using the 23-bit address signals A1 to A23, and it specifies the upper byte and lower of each word using the signals /UDS and /LDS. As a result, the CPU 510 is capable of using the 16-megabyte address space from 000000h to FFFFFFh. The "h" added to the end of the address here is a hexadecimal indicator.

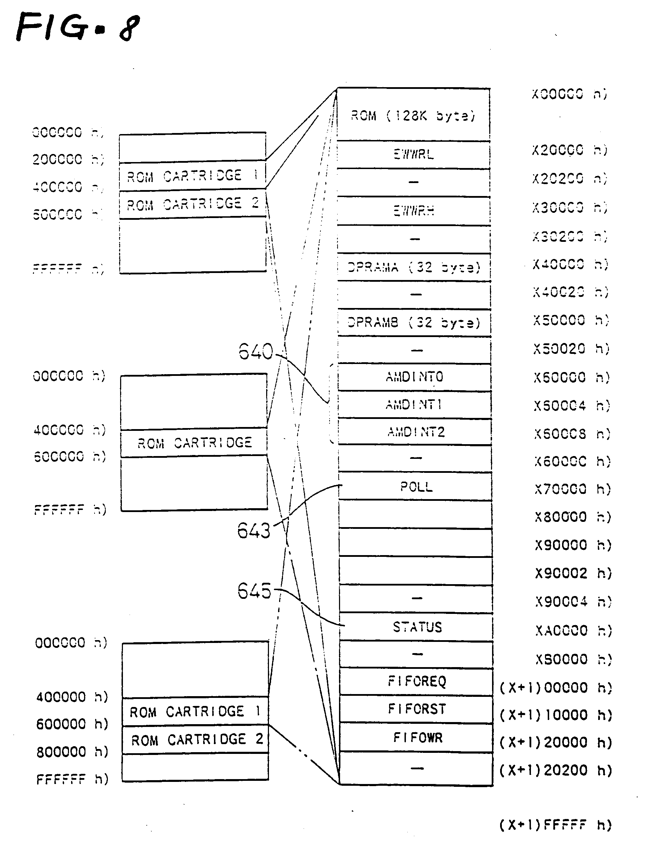

This cartridge 503 is assigned to part of the address space handled by the CPU 510 in the electronic control device 501. The CPU 510 handles the 16-megabyte address space from 000000h 10 FFFFFFh, and part of that is set aside for the ROM cartridge. The space assigned to the cartridge 503 differs depending on the type of laser printer, but in the case of a Hewlett Packard laser printer, normally the 2-megabyte space from 200000h to 3FFFFFh or from 400000h to 5FFFFFh is assigned as shown on the left side of FIG. 8.

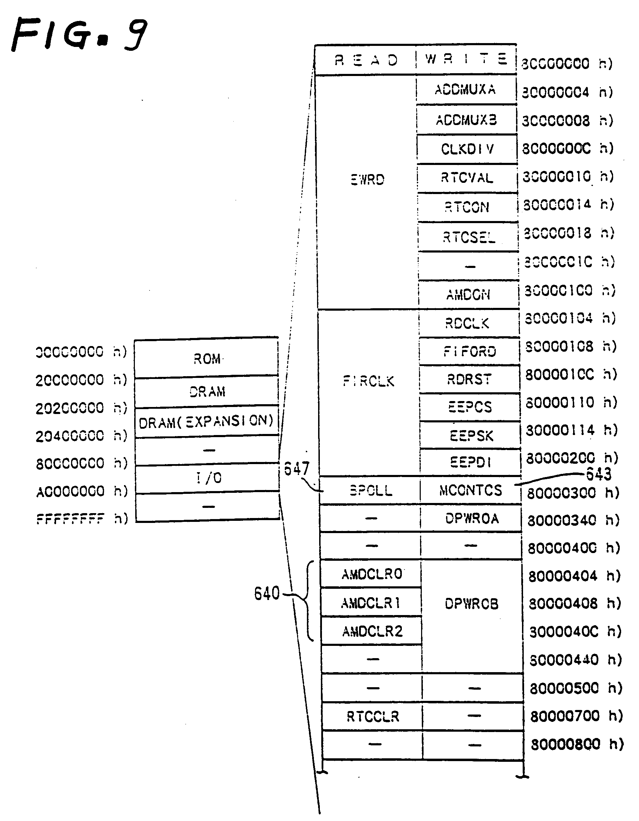

The microprocessor 601 disposed in the cartridge 503 of this embodiment is a 25-MHz AMD29030 produced by AMD Corporation, and the address space it can handle is 4 gigabytes from 00000000h to FFFFFFFFh. This address space is assigned to not only ROM or RAM but also to the various registers, etc., used to exchange data with the electronic control device 501 in the printer. This is shown in FIG. 9. Below, the internal electrical configuration of the cartridge 503 is explained together with the address space assignments for both microprocessors.

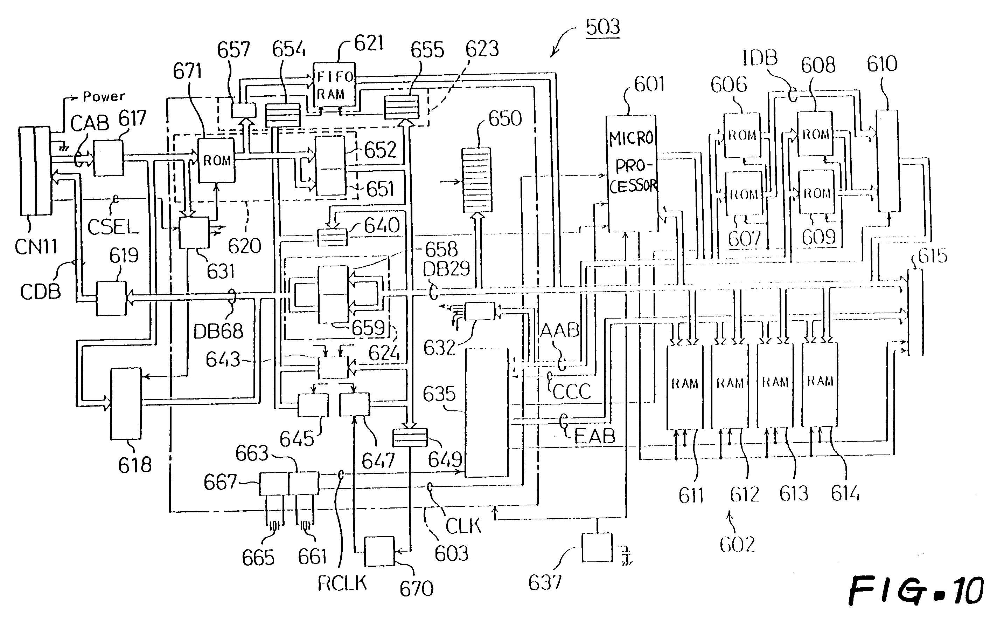

The internal configuration of the cartridge 503 is shown in FIG. 10. As shown in the figure, the cartridge 503 is configured around the microprocessor 601, which handles all control, and comprises mainly the memory section 602 made up of the ROM, RAM and their peripheral circuitry, the data transfer controller 603, which handles all exchange of data with the electronic control device 501, and other circuits.

The memory section 602 comprises ROMs 606 to 609, totaling 2 megabytes, where the programs executed by the microprocessor 601 are stored, the selector 610 for facilitating use of the ROMs 606 to 609 by bank selection, and the RAMs 611 to 614, totaling 2 megabytes, where the print data from the electronic control device 501 are stored or the image data after being developed are stored. The ROMs 606 to 609, totaling 2 megabytes, are each 4-megabit (16 bits x 256 kilobits) mask ROM, and as shown in FIG. 9, they are assigned to the address space 00000000h to 001FFFFFh. The ROMs 606 and 607 and the ROMs 608 and 609 each make up a bank, and each bank of two makes up a 32-bit data bus. The ROMs 606 to 609 and the microprocessor 601 are connected via the address bus AAB and the control signal bus. Further, the data bus IDB of the ROMs 606 to 609 is connected to the data bus DB29 via the data selector 610, whereby the microprocessor 601 is capable of reading data from the ROMs 606 to 609.

Except for the least significant 3 bits (A0, A1, A2) of the address bus AAB from the microprocessor 601, all address signals are input to the ROMs 606 and 607 and the ROMs 608 and 609. The least significant 2 bits (A0 and A1) are not input because the reading of data by the microprocessor 601 is done in 1-word = 32-bit units (4-byte units). Also, since the address A2 is not assigned, when data of a prescribed area are read, the four ROMs 606 to 609 output data simultaneously. That is, since access of ROM by the microprocessor 601 is often performed on consecutive addresses, two consecutive words, where one word is 32 bits, are read from ROMs 606 to 609 at one time, and when words that are actually consecutive are read, the bank to which the ROM belongs is sequentially switched by the data selector 610 to facilitate the reading of contiguous data. As a result, the reading of data in two contiguous words is extremely fast.

RAMs 611 to 614, on the other hand, are 16-bit x 256-kilobit = 4-megabit DRAM, and as shown in FIG. 9, they are assigned to the two megabytes of address space from 20000000h to 201FFFFFh. The memory in the cartridge 503 can be increased by 2 megabytes, for which the expansion RAM interface 615 is provided. This expansion RAM interface 615 is assigned to the address space from 20200000h to 203FFFFFh. A SIMM type RAM up to 2 megabytes can be installed in the expansion RAM interface 615. The data line of RAMs 611 to 614 and the expansion RAM interface 615 are connected directly to the data bus DB29 of the microprocessor 601, and the address line is connected to the address bus AAB of the microprocessor 601 via the data transfer controller 603. The I/O of each of the registers, etc., described below is assigned to the address space beginning from 80000000h.

When the cartridge 503 is seen from the electronic control device 501 of the printer 500, the ROM is assigned the top 128 kilobytes as shown on the right side of FIG. 8. That is, this cartridge 503 contains the program executed by the CPU 510 of the electronic control device 501, and when the cartridge 503 is installed, the CPU 510 executes a jump instruction to go to a prescribed address in this ROM upon completion of initialization. Following this, the CPU 510 operates according to the procedure stored in this ROM.

When the CPU 510 accesses this 128-kilobyte space beginning from the top of the 2-megabyte space assigned to the cartridge 503, the ROM 618 is accessed by the address signal output via the address buffer 617 provided in the address bus CAB for the connector of the cartridge 503, and the instructions and data stored in this ROM 618 are sent to the CPU 510 in the electronic control device 501 via the data buffer 619 provided in the data bus CDB for the connector. In FIG. 8, "X" indicates the value of the most significant 4 bits of the top address of the assigned space.

In the address map shown in FIG. 8 and FIG. 9, addresses other than the addresses assigned to ROM and RAM designate the various control registers and status registers. Since these registers are accessed by the data transfer controller 603, the data transfer controller will be explained next. The explanation will center around the circuitry, but the address maps (FIG. 8 and FIG. 9) are referred to as required.

The data transfer controller 603 shown in FIG. 10 is realized by means of the ASIC of the usable gate 7900. This ASIC is a standard cell, model No. SSC3630, produced by Seiko Epson Corporation, and it is a low-power element manufactured by a CMOS process. The data transfer controller 603 was designed using Seiko Epson's ASIC design system, LADSNET, which is a CAD System. This CAD system contains latches, flip-flops, counters, programmable logic arrays and other elements used in logic circuit design in the form of libraries, and after the required logic circuit is designed using these, the pattern of the ASIC can be automatically generated.

The data transfer controller 603 realized as an ASIC controls the exchange of data between the CPU 510 of the electronic control device 501 and the microprocessor 601 of the cartridge 503 when the cartridge 503 is installed in the connector CN11 of the printer 500. The exchange of data between these two is realized by means of the read control circuit 620 for sending data from the electronic control device 501 to the cartridge 503, the FIFO control circuit 623, which performs the same function by passing data via the FIFO memory 621 using part of the configuration of the read control circuit 620 (not being in accordance with the claimed structure), and the double-bank control circuit 624, which makes it possible to read data prepared by the cartridge 503 from the electronic control device 501. The FIFO memory 621 is a RAM that stores and reads data based on a first-in-first-out procedure, and in this embodiment, Mitsubishi Electric's M66252FP is used.

The address bus CAB is connected to the data transfer controller 603 via the address buffer 617 and the data bus CDB is connected to the electronic control device 501 via the data buffer 619 as signal lines with the electronic control device 501. Inside the data transfer controller 603 is a first decoder 631 that receives the signal of this address bus CAB and the cartridge select signal CSEL and outputs a selection signal to the respective parts inside the data transfer controller 603. In a similar manner, the address bus AAB and control signal CCC from the microprocessor 601 are connected to the data transfer controller 603, and inside the data transfer controller 603 is a second decoder 632 that receives this address bus AAB and outputs a selection signal to each of the internal circuits. There is also a bus controller that receives this address bus AAB and control signal CCC and outputs address signals and control signals to ROMs 606 to 609, RAMs 611 to 614 and the expansion RAM interface 615.

In addition to these, the data transfer controller 603 also contains various registers, a number of which are automatically written to when a specific process is performed in addition to those that are read from and written to by normal read-write operation. The configuration of these special registers is described below. In a relationship that treats the cartridge 503 as a read-only device as seen from the electronic control device 501, the registers writable from the electronic control device 501 have a configuration whereby they are written by performing reading from a prescribed address. That is, by specifying a prescribed address, a selection signal is output from the first decoder 631, and the data are written to the register by this signal. Reading from the register is performed by a normal read cycle. Further, the reading and writing of data from the microprocessor 601 are performed by normal read-write operation. In FIG. 10, registers are shown connected to a readable bus and writing operation is indicated by only arrows. These registers include the interrupt request registers 640, the polling command registers 643, the status registers (register STATUS in FIG. 8) 645, the transfer flag registers (register BPOLL in FIG. 9) 647, the PROM control registers 649 and the control registers 650.

Except for the status registers 645 and the transfer flag registers 647, all of these registers are generic names for multiple registers assigned as memory mapped I/O to the CPU 510 of the electronic control device 501 or the microprocessor 601 of the cartridge 503. The multiple registers are not necessarily assigned contiguous addresses. The interrupt request registers 640 include the registers AMDINT0, -1 and -2 and the registers AMDCLR0, -1 and -2 shown in FIG. 8 and FIG. 9. The polling command registers 643 include the register POLL and the register MCONTCS. The PROM control registers include the registers EEPCS, EEPSK and EEPDI.

The control registers 650 include those registers not belonging to the read control circuit 620, the FIFO control circuit 623 and the double-bank control circuit 624 and are all those registers not mentioned in the above explanation. These are the registers ADDMUXA, ADDMUXB, CLKDIV, RTCVAL, RTCON, RTCSEL, RTCCLR and SYSKEEP shown in FIG. 8 and FIG. 9.

Each of the 512-byte areas EWWRL and EWWRH shown in the memory maps in FIG. 8 and FIG. 9 are used to write from the electronic control device 501 to the first and second latches 651 and 652 of the read control circuit 620, and the register EWRD corresponds to these latches 651 and 652 seen as one word from the microprocessor 601. The registers FIFOREQ, FIFORST and FIFOWR correspond to the FIFO register 653 of the FIFO control circuit 623, and the registers FIRCLK, RDCLK, FIFORD and RDRST correspond to the FIFO read register 655 of the FIFO control circuit 623. The FIFO control circuit 623 has a latch 657 that uses some of the functions of the read control circuit 620 to retain the data to be written to FIFO memory 621.

The area indicated by the codes DPRAMA and DPRAMB in FIG. 8 are buffers with a 32-byte capacity, and they correspond to the first and second buffers 658 and 659 of the double-bank control circuit 624 as seen from the electronic control device 501. These buffers 658 and 659 as seen from the microprocessor 601 are the banks DPWROA and DPWROB shown in FIG. 9. The prescribed bits d1 and d2 of the status registers 645 are used in the exchange of data via the double-bank control circuit 624, but that is discussed in detail later.

The interrupt request register 640 generates the request for an interrupt from the electronic control device 501 to the microprocessor 601 and retains it. Interrupts from the electronic control device 501 to the microprocessor 601 are prepared in three levels, and as shown in FIG. 8, they have three registers (AMDINT0, -1, -2). By reading one of these interrupt request registers 640 from the electronic control device 501, an interrupt request for the microprocessor 601 is generated. These registers are set by a read operation from the electronic control device 501, but the data read has no meaning and is not related to the generation of an interrupt request.

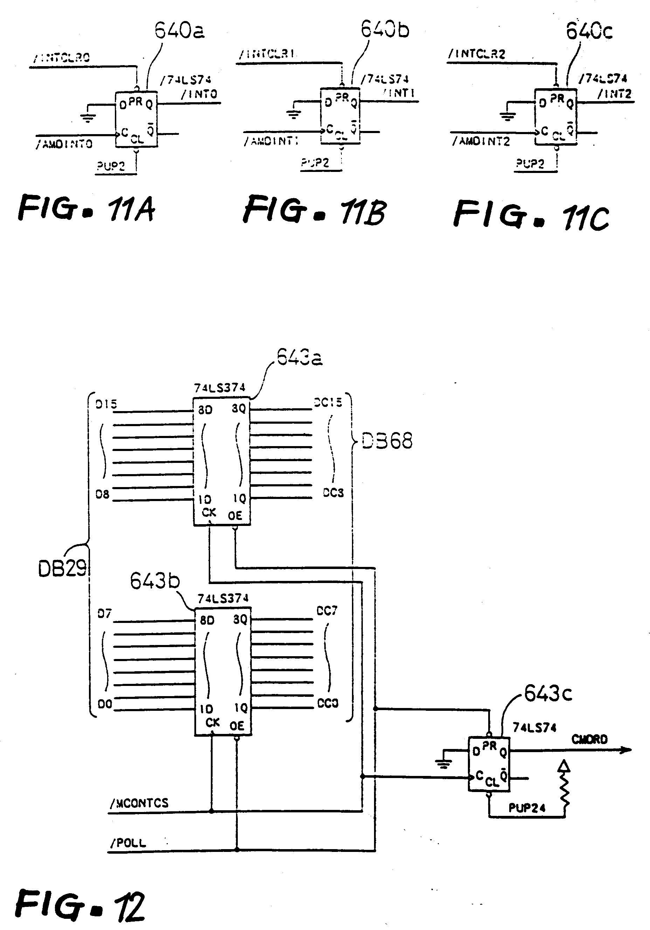

Specific examples of configurations of these interrupt request registers 640 are shown in FIG. 11. These registers are configured from D-type flip-flops, and the output terminal Q of each of the flip-flops 640a, -b and -c are set to active low by the signals /AMDINT0, -1 and -2 output by the first decoder 631 by the read operation of the above registers from the electronic control device 501, resulting in the output of the interrupt signals /INT0, -1 and -2. The slash (/) affixed to the front of signal names indicates that that signal is low active (same below). The registers that clear the outputs of these flip-flops 640a, -b and -c are assigned, as shown in FIG. 9, to prescribed addresses as three read-only registers (AMDCLR0, -1, -2). Therefore, when reading of each of the addresses assigned to these registers is performed by the microprocessor 601, the second decoder 632 outputs each of the signals /INTCLR0, -1 and -2), and the corresponding flip-flops are preset.

When an interrupt request is given from the electronic control device 501, any of the interrupt request registers 640 can be accessed, and the microprocessor 601 judges the precedence and performs processing in response to the interrupt requests. In this case, the microprocessor 601 clears the corresponding interrupt request registers 640a, -b and -c.

The polling command registers 643 are used to pass commands from the microprocessor 601 to the electronic control device 501, and these registers are writable by the microprocessor 601 and readable by the electronic control device 501. An example of a hardware configuration of these registers is shown in FIG. 12. As shown in the figure, the polling command registers 643 comprise two octal D-type flip-flops 643a and -b and one D-type flip-flop 643c, which make up a 16-bit-wide data latch.

The data bus DB29 (16-bit-wide bus) from the microprocessor 601 is connected to the data input terminals 1D to 8D of the octal D-type flip-flops 643a and -b, and the data bus DB68 (16-bit-wide bus) from the electronic control device 501 is connected to the output terminals 1Q to 8Q. The signal /MCONTCS output from the second decoder 632 at the time of access (register MCONTCS in FIG. 9) of the polling command registers 643 by the microprocessor 601 is connected to the clock terminal CK of the octal D-type flip-flops 643a and -b, and at the time this signal makes rising edge, the contents of the data bus DB29 of the microprocessor 601 are latched in the octal D-type flip-flops 643a and -b. Further, the signal /POLL output from the first decoder 631 at the time of access (register POLL in FIG. 8) of the polling command registers 643 by the electronic control device 501 is connected to the output-enable terminal OE, which enables the output of the octal D-type flip-flops 643a and -b, and when this signal becomes low active, the data latched in the octal D-type flip-flops 643a and -b are output to the data bus DB68 of the electronic control device 501.

The signal /MCONTCS and the signal /POLL are connected to the clock terminal C and preset terminal PR of the D-type flip-flop 643c, and the signal CMDRD from the output terminal Q is set to high level when the octal D-type flip-flops 643a and -b latch data (signal /MCONTCS is low level) and to low level when these data are read by the electronic control device 501 (signal /POLL is low level). The signal CMDRD output from the D-type flip-flop 643c becomes the prescribed bit d3 (flag CMDRD below) of the status registers 645, which are readable by the electronic control device 501. Therefore, when the electronic control device 501 reads the status registers 645, the electronic control device 501 can know that a command was set in the polling command registers 643 from the microprocessor 601.

When the electronic control device 501 looks at flag CMDRD, which is bit d3 of the status registers 645, and knows that the command has been sent, it reads the contents of the polling command registers 643, i.e., command sent from microprocessor 601, in a normal read cycle. The command may be an instruction to begin transfer of the print data to the data transfer controller 603, an instruction to begin printing or the display of a message in the console panel 518. When the electronic control device 501 reads the contents of the polling command registers 643, the output signal CMDRD of the D-type flip-flop 643c is inverted to high level by the signal /POLL as shown in FIG. 12. Therefore, the microprocessor 601 can know whether or not the command it output was read by the electronic control device 501 by monitoring the prescribed bit d2 of this transferred flag registers 647.

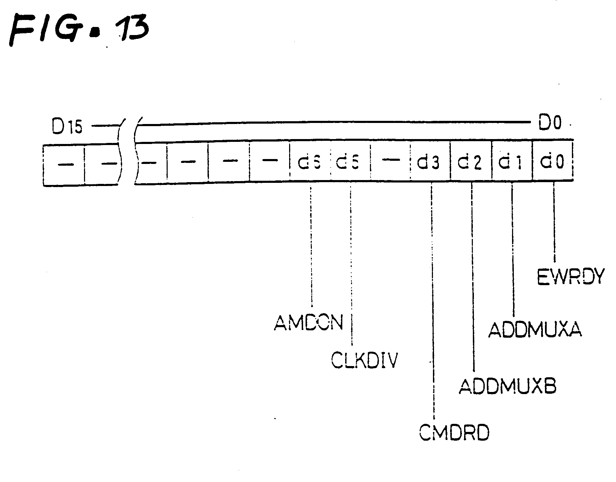

In addition to the above-described information that indicates whether or not a command has been set from the microprocessor 601, the status registers 645 also hold the information shown in FIG. 13. A description of each bit is given below. Bit d0 is set to low level by the signal EWRDY generated in the read control circuit 620 when data are written to the read control circuit 620 from the electronic control device 501, and when those data are read by the microprocessor 601, bit d0 is set to high level by a signal from the second decoder 632. This bit is called flag EWRDY.

Bits d1 and d2 indicate whether the double-bank control circuit 624 can be accessed from the electronic control device 501 or the microprocessor 601, and they are respectively referred to as flag ADDMUXA and ADDMUXB. These two bits correspond respectively to the two transfer banks built into the double-bank control circuit 624. These bits d1 and d2 are set and reset by the microprocessor 601 writing data to bit d0 of the registers ADDMUXA and ADDMUXAB included in the control registers 650 as shown in FIG. 9. Therefore, by setting this flag to low level before the microprocessor 601 writes data to one of the banks of the double-bank control circuit 624 and resetting it to high level upon completion of writing and having the electronic control device 501 read data from the bank for which the flag is high level, data can be passed continuously from the microprocessor 601 to the electronic control device 501 by alternately writing data to and reading data from these two banks.

Bit d3 (flag CMDRD) has already been described. Bit d5 is flag CLKDIV, which is set based on the operation clock of the microprocessor 601. The operation clock of the microprocessor 601 is the clock CLK output from the first oscillator 661, which uses an externally attached liquid crystal vibrator CRC1, and when the microprocessor 601 writes level 0 to the prescribed bit d0 of the register CLKDIV of the control register 650, the operation CLK of the microprocessor 601 becomes 25 MHz, and when level 1 is written to bit d0, then the operation clock becomes 12.5 MHz. The flag CLKDIV of the status registers 645 as seen from the electronic control device 501 is set to low level when this clock CLK is 25 MHz and to high level when it is 12.5 MHz. When it is necessary for the electronic control device 501 to know the frequency of the operating clock, i.e., operating speed, of the microprocessor 601 in order to match timing for data transfer, etc., it checks this bit of the status registers 645.

Bit d6 is the flag ADMON, which is set to high level when the microprocessor 601 is operating and to low level when it enters the sleep mode. In this embodiment, the microprocessor 601 performs processing that receives the page description language from the electronic control device 501 and develops it into image data, and therefore when a prescribed amount of time has elapsed during which no page description language to be processed is sent from the electronic control device 501, the microprocessor 601 reduces its initial operating frequency by one half to 12.5 MHz in order to reduce power consumption, and after more time has elapsed, it stops its own operation and enters the so-called "sleep mode." At this time, the microprocessor 601 writes level 0 to register ADMON of the control register 650. As a result, this bit d6 of the status registers 645 becomes low level as seen from the electronic control device 501, and by checking this bit, the electronic control device 501 can know the operating mode of the microprocessor 601.

This time is measured with a real-time clock built into the data transfer controller 603. The clock RCLK for this real-time clock is a clock from the second oscillator 667 configured using an externally attached liquid crystal vibrator 665. The real-time clock is disposed inside the bus controller 635, and it receives instructions from the microprocessor 601 to measure the elapse of prescribed time periods. The reason why two sets of liquid crystal vibrators and oscillators are employed is to make it possible to change the operating clock CLK of the microprocessor 601 independently of the operating clock RCLK of the real-time clock.

The real-time clock sets the d1 bit of registers RTCVAL and RTCSEL, which belong to the control registers 650, to low or high, and it is capable of specifying four interval timers, which it can start by writing level 1 to the prescribed bit d0 of the register RTCON. A timer that has been started outputs an interrupt request signal to the microprocessor 601 at prescribed intervals unit level 0 is written to bit d0 of register RTCON and it is stopped. When the microprocessor 601 receives this interrupt request signal, it reads register RTCCLR and clears the interrupt request. The output of these interval timers are used for counting user time, etc., in the processing of the page description language.

Next is an explanation of the configuration of the PROM control registers 649. The PROM control registers 649 include registers the EEPCS, EEPSK and EEPDI shown in FIG. 9, but these registers are memory built into the cartridge 503 and are used to exchange data with the EEPROM 670, which is capable of electrical erasure and rewriting of data.

The cartridge 503 of this embodiment stores the various variables (configuration) required for operation of the laser printer 500 in the EEPROM 670. This EEPROM 670 is one that reads, erases and writes data by serial transfer, and in this embodiment National Semiconductor's NMC93C66X3 is used. This EEPROM 670 has a storage capacity of 16 bits x 256 bytes (number of registers) and is capable of reading, erasing or writing the contents of any specified register. When the EEPROM 670 is set to a selection condition by the chip select signal CS, the "0" and "1" data sent to the serial data input terminal Din are received in sync with the serial data clock SL, but the first three transferred bits of the data are interpreted as a command to the EEPROM, and the next 8 bits are interpreted as the register number where the data are to be read, erased or written. In the case of writing data, the data to be stored are supplied to the data input terminal Din in sync with the serial data clock SL following these command and register specifications.

The register EEPCS switches the chip select signal, and when the microprocessor 601 writes level 1 to bit d0 of this register, the EEPROM 670 goes to a select condition. Register EEPSK generates the serial data clock SK, and when the microprocessor 601 alternately writes level 0 and level 1 to this register, it generates the serial data clock for the EEPROM 670. The register EEPDI holds the 1-bit data to be written to the EEPROM 670, and the microprocessor 601 rewrites the register EEPSK and rewrites the prescribed bit d0 of register EEPDI according to the data to be written in sync with the generation of the serial data clock SK. The data output terminal Dout of the EEPROM 670 is the prescribed bit d0 of the transfer flag registers 647 explained above, and if the microprocessor 601 reads bit d0 of the transfer flag registers 647 in sync with the serial data clock SK after it outputs the data read command and the number of the register to be read to the EEPROM 670, then it can read the contents of the specified register. Since the data stored in the EEPROM 670 are retained even after the power is turned off, the contents of the EEPROM 670 can be read immediately after the laser printer 500 is powered on again, thus making it possible to return the configuration to the condition it was in immediately before powering off.

The electronic control device 501 transfers data to the microprocessor 601 according to a below described procedure. The data to be transferred from the electronic control device 501 to the microprocessor 601 is print data the electronic control device 501 has received from the workstation 507 and is the page description language program to be processed in the microprocessor 601 of the cartridge 503. When it is judged that all data have been received, the microprocessor 610 writes a command to the polling command registers 643 that indicates the completion of the writing of data. The CPU 510 of the electronic control device 501 knows that data reception by the FIFO control circuit 623 is complete by reading the contents of the polling command registers 643. The microprocessor 601 then escapes to RTN and terminates this routine.

Large amounts of data can be efficiently transferred from the electronic control device 501 10 the microprocessor 601. The transferred data are stored in a prescribed area in RAMs 611 to 614 of the data transfer controller 603 and wait for processing by the microprocessor 601. The microprocessor 601 receives all of the print data to be developed by the electronic control device 501, activates the program stored in ROMs 606 to 609, and processes the print data stored in the prescribed area in RAMs 611 to 614. This processing develops the image, and the developed result is stored as image data in a prescribed area in RAMs 611 to 614.

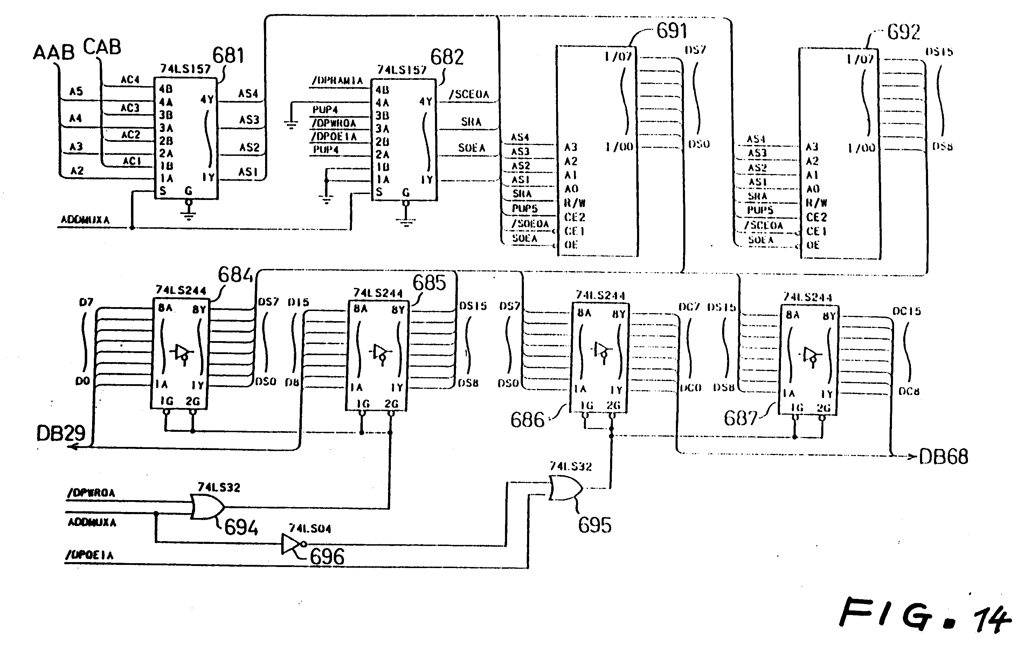

The image data obtained upon completion of image development are then transferred to the electronic control device 501, where they are stored in RAM 512 and printed by the laser engine 505 according to a prescribed timing. These image data are transferred by the double-bank control circuit 624. The double-bank control circuit 624 transfers from the microprocessor 601 to the electronic control device 501 and is equipped with two banks that store 32 bytes (16 words) of data. These are referred to as A bank and B bank, and since the hardware of both is exactly the same, only the configuration of A bank is shown in FIG. 14.

The address and data buses of each of these banks are configured such that they can be switched from the microprocessor 601 and from the electronic control device 501, and as shown in the figure, they are connected to data selectors 681 and 682, which select the address line, four octal line buffers 684 to 687, which are used in two sets of two each and select the data bus (16 bits wide), RAMs 691 and 692, which have a 32-byte storage capacity, the OR gates 694 and 695, which make up the other gates, and the inverter 696. In FIG. 14, a configuration is shown in which two memory chips with a 32-byte storage capacity are used, but the memory can also be realized by switching the upper address of a single memory chip.

The data selector 681 is configured such that it selects the least significant four bits (AC1 to AC4) of the address bus CAB on the electronic control device 501 side and the lower four bits (A2 to A5) of the address bus AAB on the microprocessor 601 side and outputs them, and selection of the address bus is performed by the signal ADDMUXA (bit d0 of register ADDMUXA) connected to the select terminal S. The data selector 682 switches the read-write signal for the RAMs 691 and 692 in addition to selecting an address bus, and in a similar manner, the signal ADDMUXA connected to the select terminal S determines which signal is connected to the chip select terminals CE1 and -2 and the output-enable terminal OE by switching them.

The octal line buffers 684 and 685 are tristate line buffers connected to the data bus DB29, and when the gate terminals 1G and 2G become low level, the data bus DB29 on the microprocessor 601 side and the data bus of the RAMs 691 and 692 are connected, resulting in a condition that allows writing of data from the microprocessor 601 to RAMs 691 and 692. The output of the OR gate 694, whose inputs are the signal /DPWROA and the signal /DDMUXA, is connected to the gate terminals 1G and 2G of the octal line buffers 684 and 685. The signal /DPWROA becomes low level when the microprocessor 601 writes data to A bank. Therefore, by setting bit d0 of register ADDMUXA to low level in advance of writing data to A bank, when the microprocessor 601 does write data to A bank, the gates of the octal line buffers 684 and 685 open and the data output to the data bus DB29 are output to the data bus of RAMs 691 and 692, where they are written.

When the gate terminals 1G and 2G of the octal line buffers 686 and 687 become low level, the data bus DB68 on the electronic control device 501 side and the data bus of the RAMs 691 and 692 are connected, resulting in a condition in which data can be read out from RAMs 691 and 692 to the electronic control device 501. The output of the OR gate 695, whose inputs are the signal /DPOE1A and the signal ADDMUXA inverted in the inverter 696, is connected to the gate terminals 1G and 2G of the octal line buffers 686 and 687. The signal /DPOE1A becomes low level when the electronic control device 501 tries to read the data of A bank. Therefore, by setting bit d0 of register ADDMUXA to high level in advance of reading the data of A bank, the gates of the octal line buffers 686 and 687 open and the data output to the data bus of RAMs 691 and 692 are output to the data bus DB68 when the electronic control device 501 performs a read operation on A bank.

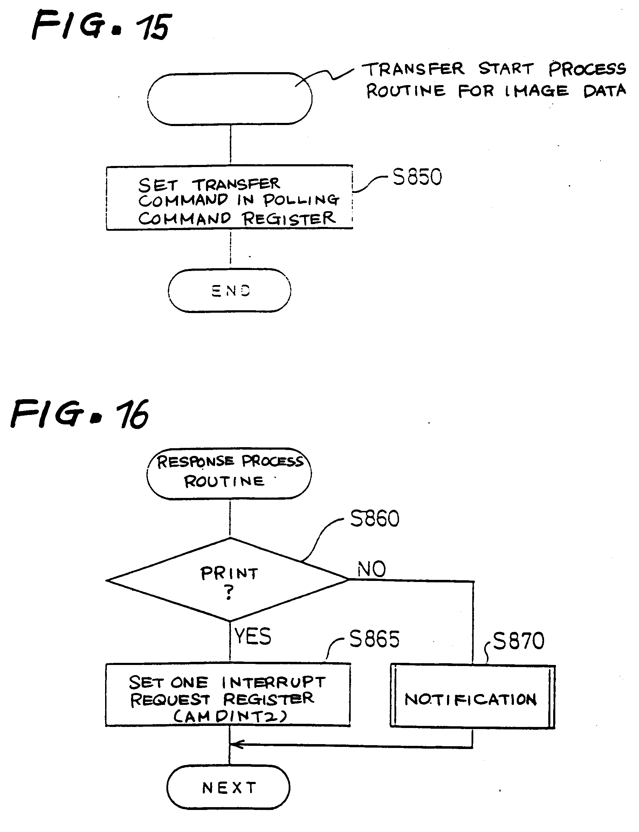

The transfer processing of image data by the microprocessor 601 and its receiving processing by the CPU 510 of the electronic control device 501 are explained below assuming this hardware. FIG. 15 is a flowchart showing the transfer start handler routine for image data executed by the microprocessor 601. As shown in the figure, the microprocessor 601 sets a transfer start command in the polling command register 643 before transferring image data (step S850).

The CPU 510 of the electronic control device 501 reads this polling command register 643 and executes the response handler routine shown in FIG. 16. That is, the electronic control device 501 judges whether or not the laser printer 500 is in a print-enabled condition (step S860), and if it judges that it is in a condition that will allow printing, then it sets one (AMDINT2) of the interrupt request registers (step S865) and escapes to NEXT and temporarily terminates the routine. If the printer is not in a condition that will allow printing, then the CPU 510 performs processing that notifies the microprocessor 601 of the cartridge 503 (step S870). A condition that will not allow printing is one in which the laser engine has not completely warmed up yet, or there is a paper jam or other condition that will not allow printing even though the image data have been received.

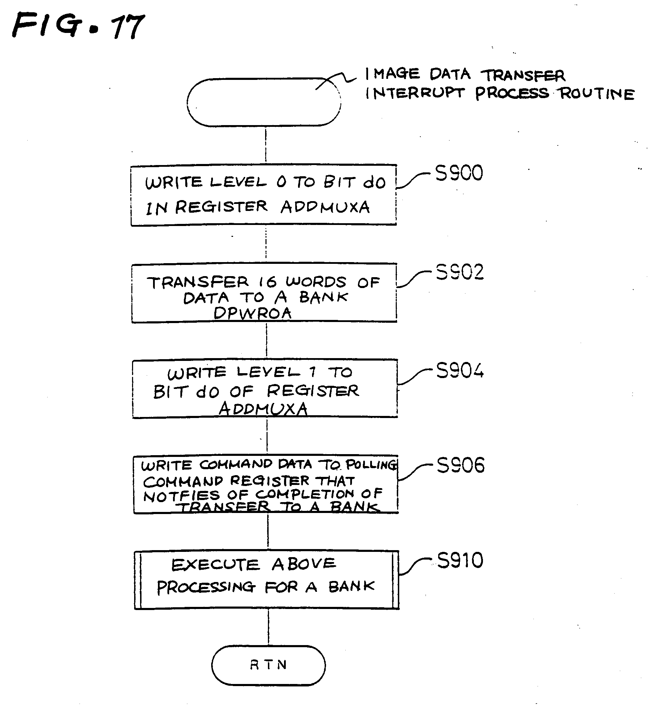

When the interrupt request signal AMDINT2 is received from the electronic control device 501, the microprocessor 601 initiates the data transfer interrupt handler routine shown in FIG. 17. When this processing is activated, the microprocessor 601 first writes level 1 to bit d0 of register ADDMUXA (step S900). When bit d0 of register ADDMUXA is level 1, the data bus of RAMs 691 and 692 is connected to the data bus DB29 on the microprocessor 601 side, thus disabling access from the electronic control device 501.

Next the microprocessor 601 transfers 16 words (32 bytes) of data to A bank DPWROA (step S902). When data are written to A bank DPWROA, the signal /DPWROA shown in FIG. 14 becomes low level, and the data are written to RAMs 691 and 692 via the octal line buffers 684 and 685. Upon completion of transfer of the 16 words of data, the microprocessor 601 writes level 1 to bit d0 of register ADDMUXA (step S904), and the data bus of RAMs 691 and 692, which make up A bank, is connected to the data bus DB68 of the electronic control device 501.

The microprocessor 601 then writes the command data that notifies that transfer to A bank is complete to the polling command registers 643 (step S906). This completes transfer of data to A bank, and the microprocessor 601 then executes the same processing as above with respect to B bank (step S910). When data transfer to B bank is complete, the microprocessor 601 writes command data that notifies that transfer is complete, in the same way to the polling command registers 643. In this way, the transfer of a total of 32 words (64 bytes) of data to A and B banks from the cartridge 503 is completed.

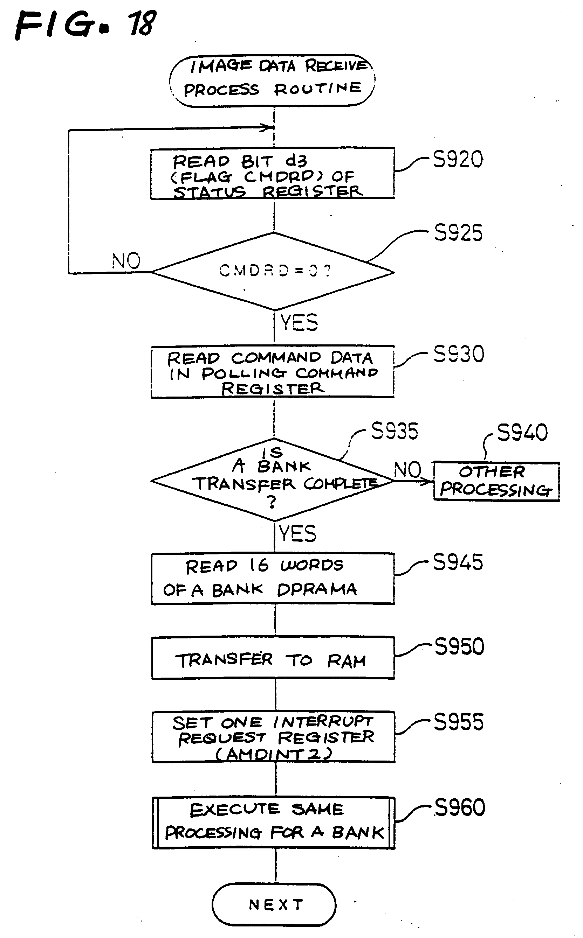

In response to the above processing performed by the microprocessor 601, the CPU 510 of the electronic control device 501 executes the image data receive handler routine shown in FIG. 18. That is, the CPU 510 first reads bit d3 of the status registers 645, i.e., flag CMDRD, (step S920) and judges whether or not it is at level 0 (step S925). When command data is written to the polling command registers 643 by the microprocessor 601, flag CMDRD is set to level 0, and therefore the CPU 510 reads the command data in the polling command registers 643 (step S930).

The CPU 510 checks the read command data and judges if it is command data that indicates that data transfer to A bank is complete (step S935), and if it is not, then the CPU 510 executes other processing (step S940). When the command data in the polling command register 643 indicate that data transfer to A bank is complete, the electronic control device 501 reads the 16 words in A bank DPRAMA (step S945; see FIG. 8) and transfers the read data to RAM 512 (step S950).

Since the above processing completes the reading of the 16 words of data in A bank, the electronic control device 501 sets one interrupt request register (AMDINT2) that will allow transfer of the next 16 words from the microprocessor 601. The processing in steps S920 to S955 is then repeated with respect to B bank. That is, when it is judged that the transfer of data by the microprocessor 601 from B bank has been completed based on the command data in the polling command registers 643, then one interrupt request register is set to send an interrupt request to the microprocessor 601 after the 16 words of data in B bank DPRAMB are read and transferred to RAM 512.

When it receives the interrupt request, the microprocessor 601 executes the interrupt handler routine shown in FIG. 17 again, and therefore the microprocessor 601 and CPU 510 complete the transfer of all image data by executing both routines (FIG. 17 and FIG. 18). If new print data are not received from the electronic control device 501 after all image data have been transferred, then the microprocessor 601 writes level 1 to register CLKDIV of the control registers 650 after a prescribed time period has elapsed and switches its own operating frequency by half, i.e., to 12.5 MHz, to reduce power consumption and reduce the amount of heat generated.

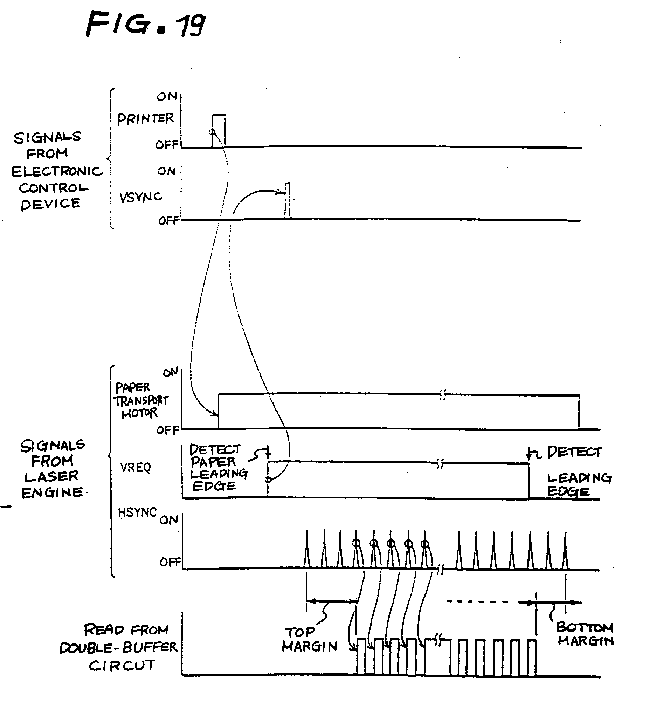

The electronic control device 501, which receives the transfer of all image data, prints the image data by exchanging signals with the laser engine 505 using the double-buffer circuit 520 and register 517 explained above. The exchange of signals between the electronic control device 501 and laser engine 505 is roughly depicted in FIG. 19. Printing is summarized below referring to this figure.

When the image data that have been developed are received from the cartridge 503, the electronic control device 501 inquires whether or not the laser engine 505 is in a print-enabled condition, and if it does judge that warming up, etc., are complete and the laser engine is in a print-enabled condition, then it outputs the print signals shown in FIG. 19 to the laser engine 505 via the register 517. When the laser engine 505 receives these signals, it immediately starts the motor for paper transport. Rotation of the photosensitive drum, charging processing, etc., are started in sync with this.

When the paper to be printed on reaches a position at a prescribed distance from the photosensitive drum, the laser engine 505 detects the front end of the paper and outputs the signal VREQ to the electronic control device 501 via the register 517. When the electronic control device 501 receives this signal VREQ, it waits a prescribed period of time; i.e., the time required for the photosensitive drum to rotate to the position where formation of the latent image by the laser beam begins, and outputs the signal VSYNC via the register 517. When the laser engine 505 receives this signal VSYNC, it outputs the laser beam horizontal sync signal HSYNC via the register 517. Since this signal HSYNC is a signal that instructs to begin reading one line of image data, the laser engine 505 reads image data from either RAM 520A or RAM 520B of the double-buffer circuit 520 in sync with this signal. When there is a top margin, control is performed that ignores the signal VSYNC for the number of lines corresponding to the top margin. This control is the same when a bottom margin is formed.

At the same time, the CPU 510 counts this signal and transfers the necessary image data to RAM 520A or RAM 520B of the double-buffer circuit 520. When a prescribed amount of time has elapsed or the count of the horizontal sync signal becomes equal to a value previously set to conform with the paper size after the laser engine 505 detects the trailing edge of the paper, the CPU 510 terminates the transfer of image data to the double-buffer circuit 520. By means of the above processing, one page of image data is transferred to the laser engine and the image is printed on the paper.

By means of the embodiment described above, data can be transferred from the electronic control device 501 to the cartridge 503. Moreover, since an ASIC is used in this embodiment, the circuit can be made more compact and simpler. Further, since both the read control circuit 620 and FIFO control circuit 623 are employed to transport data from the electronic control device 501 to the data transfer controller 603, data can be transferred efficiently by using one or the other depending on the type of data to be transferred. Also, if one system should fail, the other system can be used to compensate.

Since the electronic control device 501 uses an interrupt to notify in the case of transfer of data to the cartridge 503 in this embodiment, the microprocessor 601 of the cartridge 503 need not continually monitor the operation of the electronic control device 501, thus allowing it to be operated more efficiently.

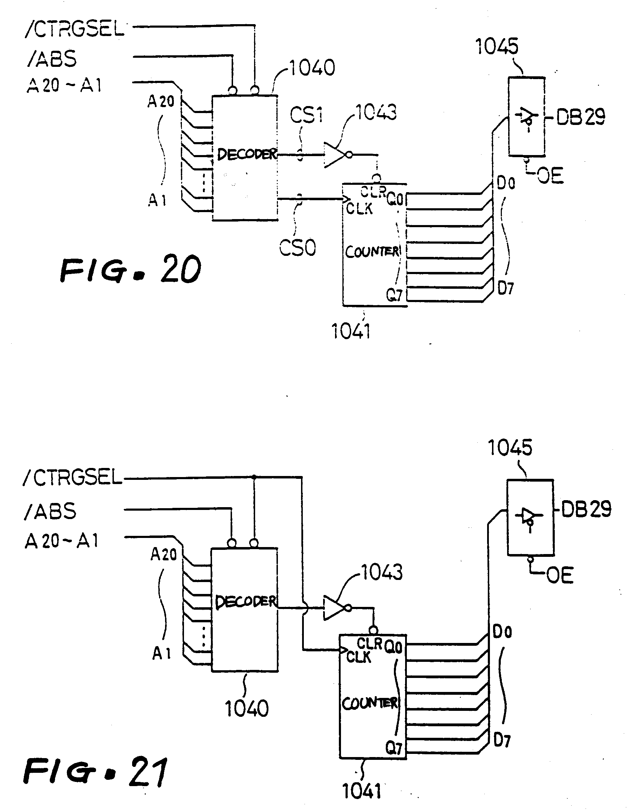

Specific configurations for the transfer of data in devices with a read-only data bus are explained in the following with reference to FIG. 20 and 21. The following explanations assume the configuration of the embodiment described above in order to simplify the explanations and the same signals names are used, but these configurations for data transfer are not limited to this embodiment.

The circuit shown in FIG. 20 comprises a decoder 1040 that outputs selection signals when this circuit is selected, a 8-bit counter 1041 that performs counting by means of a selection signal CS0 from the decoder 1040, and an inverter 1043 that inverts the other selection signal CS1 from the decoder 1040 and inputs it to the clear terminal of the counter 1041. The eight outputs Q0 to Q7 of the counter 1041 are connected to the lower bytes D0 to D7 of the data bus DB29 of the microprocessor 601 via a tristate buffer 1045.

When data are transferred from the electronic control device 501 to the microprocessor 601 in this configuration, the electronic control device 501 first performs a read operation on a prescribed address and sets the selection signal CS1 of the decoder 1040 to high level, whereby it clears the counter 1041 to zero. Following this, processing is performed that reads a number of prescribed addresses equal to the number of data D to be transferred, and the selection signal CS0 is switched on and off a prescribed number of times. As a result, the counter 1041 counts this number D and the outputs Q0 to Q7 become equal to the data D to be transferred. The electronic control device 501 notifies the microprocessor 601 that data transfer has been completed by means of an interrupt request signal, which is not shown. When the microprocessor 601 receives the interrupt request signal, it enables the output of the tristate buffer 1045 and completes data transfer by reading the output of this counter 1041.

When the amount of data to be transferred becomes large in this embodiment, much time is required for transfer, but only a very few number of addresses need be occupied. In this example, the counter 1041 was cleared to zero by the electronic control device 501, but a configuration is also possible in which it is cleared by the microprocessor 601, in which case it becomes possible to transfer data by assigning only one address.

As shown in FIG. 21, the cartridge selection signal /CTRGSEL that indicates the cartridge 503 has been selected can be used for the clock signal of the counter 1041. In this example, the address signal is used to clear the counter 1041, but by clearing the counter from the microprocessor 601 and transferring the start and completion of data transfer via interrupt request signals, data can be transferred without specifying addresses.

In the two circuits described above, an 8-place counter was used, but by using a counter with more places, data of more than 8 bits can be transferred at the same time. Of course, data in units of less than 8 bits can also be transferred.

The embodiments explained above concerned the application of the invention to a printer, but application of the invention is not limited to printers; e.g., it can also be applied to word processors, personal computers and workstations. In recent years, in addition to expansion slots, many computer-related devices have the ability to accommodate cartridge-type expansion devices such as IC cards. By mounting the accessory control device of the invention in a word processor, personal computer, etc., equipped with an expansion slot, IC card, etc., and shifting processing by the processor of the man unit to processing stored in the memory built into the accessory control device by a monitor command, etc., and processing information together with the processor in the accessory control device, the information processing function can be easily improved, added to or changed. Further, once control is shifted to the accessory control device, the contents of the processing can be changed in any manner, and therefore the functions of devices that have already been purchased can be changed or improved and the software in word processors and other dedicated devices can be upgraded.

In this way, the invention can be applied to all types of devices that employ a processor, e.g., electrical equipment for vehicles, facsimile machines, telephones, electronic notebooks, electronic musical instruments, electronic cameras, translating machines, handy copiers, cash dispensers, remote controllers, calculators and any other information processing device to which an accessory control device can be connected via a connector. If the processor in the main unit of these types of information processing devices has a function that recognizes an accessory control device and transfers its processing to an address prepared in the accessory control device, the accessory control device and information processing device of the invention can be easily realized even in existing electronic devices. Even in cases in which this function is not provided, various means can be considered for shifting the processor of the main unit to processing stored in the accessory control device.

When the 68000 family of processors read data from a prescribed address, data on the data bus is judged to be fixed or not by the signal DTACK returned to the processor of the device (slave) outputting the data. Therefore, when the processor of the man unit attempts to execute a jump instruction to an absolute address while executing processing stored in ROM in the main unit, the accessory control device analyzes the instruction and detects it as the execution of a jump instruction to an absolute address, and before the original ROM in the main unit can output the target absolute address of the jump to the data bus, the accessory control device outputs the execution address in ROM in the accessory control device to the data bus and returns the signal DTACK to the processor in the main unit, whereby processing is forcibly shifted subsequent to a prescribed address in the accessory control device. Once processing is shifted to ROM in the accessory control device, subsequent processing can be configured in any manner.

This example is premised on the execution of a jump instruction to an absolute address by the processor in the main unit, but since the jump instruction itself comes from ROM in the main unit, a configuration can be employed that supplies a code equivalent to the jump instruction from the accessory control device to the data bus when the instruction is first read from ROM after powering on and also returns the signal DTACK. In these methods, there is a possibility of conflict with the signal DTACK, but the methods can be realized through careful analysis of the bus timing.

Further, in the embodiments described above, the accessory control device is configured as a cartridge capable of being handled as a single unit in which a printed circuit board is housed in a case, but it may also be configured as a single circuit board that mounts in an expansion slot. An accessory control device occupying multiple connectors can also be realized. In another configuration of the invention, the case itself may be configured as a printed circuit board.

The invention is not limited by the above embodiments; e.g., a configuration in which the cartridge, with built-in outline fonts, receives the character point size and other data from the printer, generates a bit image at the specified point size and transfers it to the printer, a configuration in which data received from the electronic device are not subjected to particularly complex processing in the accessory control device but rather are merely stored or displayed, a configuration in which the main printer unit is an ink jet printer, and other configurations are possible as long as they do not deviate from the appended claims.

## Claims

1. An information processing device including an electronic device (501) and an accessory control device (503) connected to one another by means of a connector (CN11), wherein the electronic device is capable of reading data from and writing data to said accessory control device,
wherein said electronic device (501) comprises:
a first processor (510) capable of logic operation,
first memory means (511, 512) for storing the processing executed by the processor, and
said connector which is connected to a data signal line capable of only receiving data, an address signal line and a control signal line of the first processor;
**characterized in that** said accessory control device (503) comprises:
a second processor (601) capable of logic operation separate from the first processor,
second memory means (602) for storing the procedure executed by the second processor;
data fetch means (1040; /CTRGSEL) responsive to said address signal line and/or said control signal line for detecting access to said accessory control device and for putting out a selection signal each time access is detected,
a counter (1041) for counting said selection signals,
means for resetting the counter (1043), and
means (1045) for applying count values of said counter as data to a data signal line of said second processor.

2. An accessory control device adapted for use in an information processing device as claimed in claim 1, comprising:
a processor (601) capable of logic operation,
memory means (602) for storing the procedure executed by the processor;
data fetch means (1040; /CTRGSEL) responsive to an externally applied address signal line and/or control signal line for detecting access to said accessory control device and for putting out a selection signal each time access is detected,
a counter (1041) for counting said selection signals,
means (1043) for resetting the counter, and
means (1045) for applying count values of said counter as data to a data signal line of said second processor.

## Patentansprüche

1. Informationsverarbeitungseinrichtung, umfassend eine elektronische Einrichtung (501) und eine Zubehörsteuereinrichtung (503), die miteinander mittels eines Verbinders (CN11) verbunden sind, wobei die elektronische Einrichtung in der Lage ist, Daten von der Zubehöreinrichtung zu lesen und zu ihr zu schreiben,
wobei die elektronische Einrichtung (501) umfaßt:
einen ersten Prozessor (510), der zu logischen Operationen befähigt ist,
eine erste Speicheranordnung (511, 512) zur Speicherung der von dem Prozessor
ausgeführten Verarbeitung, und den Verbinder, der mit einer Datensignalleitung, die lediglich zum Empfang von Daten in der Lage ist, einer Adressensignalleitung und einer Steuersignalleitung des ersten Prozessors verbunden ist,
dadurch gekennzeichnet, daß die Zubehörsteuereinrichtung (503) umfaßt:
einen zweiten Prozessor (601), der gesondert von dem ersten Prozessor zu logischen Operationen befähigt ist,
eine zweite Speicheranordnung (602) zur Speicherung der von dem zweiten Prozessor ausgeführten Prozedur,
Datenabholmittel (1040; /CTRGSEL), die auf die Adressensignalleitung und/oder die Steuersignalleitung reagieren, um einen Zugriff auf die Zubehörsteuereinrichtung festzustellen und jedesmal ein Wählsignal auszugeben, wenn ein Zugriff festgestellt wird,
einen Zähler (1041) zum Zählen der Wählsignale,
Mittel zum Zurücksetzen des Zählers (1043), und
Mittel (1045) zum Anlegen von Zählwerten des Zählers als Daten an eine Datensignalleitung des zweiten Prozessors.

2. Zubehörsteuereinrichtung angepaßt an die Verwendung in einer Informationsverarbeitungseinrichtung nach Anspruch 1, umfassend:
einen Prozessor (601), der zu logischen Operationen befähigt ist,
eine Speicheranordnung (602) zur Speicherung der von dem Prozessor ausgeführten Prozedur,
Datenabholmittel (1040; /CTRGSEL), die auf die Adressensignalleitung und/oder die Steuersignalleitung reagieren, um einen Zugriff auf die Zubehörsteuereinrichtung festzustellen und jedesmal ein Wählsignal auszugeben, wenn ein Zugriff festgestellt wird,
einen Zähler (1041) zum Zählen der Wählsignale,
Mittel zum Zurücksetzen des Zählers (1043), und
Mittel (1045) zum Anlegen von Zählwerten des Zählers als Daten an eine Datensignalleitung des zweiten Prozessors.

## Revendications

1. Dispositif informatique comprenant un dispositif électronique (501) et un dispositif de commande d'accessoire (503) raccordés l'un à l'autre au moyen d'un connecteur (CN11), dans lequel le dispositif électronique peut lire des données provenant dudit et d'écrire des données dans ledit dispositif de commande d'accessoire,
dans lequel ledit dispositif électronique (501) comprend :
un premier processeur (510) pouvant effectuer des opérations logiques,
des premiers moyens de mémoire (511, 512) pour stocker le traitement exécuté par le processeur, et
ledit connecteur qui est connecté à une ligne de transfert de signaux de données pouvant seulement recevoir des données, une ligne de transfert de signaux d'adresse et une ligne de transfert de signaux de commande du premier processeur;
caractérisé en ce que ledit dispositif de commande d'accessoire (503) comprend :
un second processeur (601) pouvant effectuer des opérations logiques séparé du premier processeur,
des seconds moyens de mémoire (602) pour stocker la procédure exécutée par le second processeur;
des moyens d'extraction de données (1040; /CTRGSEL) réagissant à ladite ligne de transfert de signaux d'adresse et/ou à ladite ligne de transfert de signaux de commande pour détecter un accès audit dispositif de commande d'accessoire et pour émettre un signal de sélection chaque fois qu'un accès est détecté,
un compteur (1041) pour compter lesdits signaux de sélection,
des moyens pour remettre le compteur à zéro (1043), et
des moyens (1045) pour appliquer des valeurs de comptage dudit compteur comme données à une ligne de transfert de signaux de données dudit second processeur.

2. Dispositif de commande d'accessoire pouvant être utilisé dans un dispositif informatique selon la revendication 1, comprenant :
un processeur (601) pouvant effectuer des opérations logiques,
des moyens de mémoire (602) pour stocker la procédure exécutée par le processeur;
des moyens d'extraction de données (1040; /CTRGSEL) réagissant à une ligne de transfert de signaux d'adresse appliqués extérieurement et/ou une ligne de transfert de signaux de commande pour détecter un accès audit dispositif de commande d'accessoire et pour émettre un signal de sélection chaque fois qu'un accès est détecté,
un compteur (1041) pour compter lesdits signaux de sélection,
des moyens (1043) pour remettre le compteur à zéro, et
des moyens (1045) pour appliquer des valeurs de comptage dudit compteur comme données à une ligne de transfert de signaux de données dudit second processeur.
